Europäisches Patentamt

European Patent Office

Office européen des brevets

(19)

(11) **EP 0 905 498 B1**

(12) **FASCICULE DE BREVET EUROPEEN**

(45) Date de publication et mention
de la délivrance du brevet:
**21.07.2004 Bulletin 2004/30**

(51) Int Cl.⁷: **G01M 3/28**, G01M 3/32

(21) Numéro de dépôt: **98401550.3**

(22) Date de dépôt: **24.06.1998**

(54) **Procédé de génération d'au moins un signal d'alerte relatif au niveau dans un réservoir de stockage d'un produit et dispositif pour la mise en oeuvre du procédé**

Verfahren und Anordnung zur Generierung mindestens eines Alarmsignals für den Füllstand eines Lagertanks

Process and apparatus for generation of at least one alarmsignal related to level inside of a storage tank

(84) Etats contractants désignés:
**BE CH DE DK ES FI FR GB GR IT LI LU NL PT SE**

(30) Priorité: **26.06.1997 FR 9708031**

(43) Date de publication de la demande:
**31.03.1999 Bulletin 1999/13**

(73) Titulaire: **L'air Liquide, S.A. à Directoire et Conseil de Surveillance pour l'Etude et l'Exploitation des Procédés Georges Claude**
**75321 Paris Cedex 07 (FR)**

(72) Inventeurs:
• **Narth, Frédéric**
  **75015 Paris (FR)**

• **Dulphy-Vigor, Véronique**
  **Chicago, IL 60611 (US)**
• **Ferenci, Laurent**
  **75018 Paris (FR)**
• **Viard, Nicolas**
  **78530 Buc (FR)**

(74) Mandataire: **Le Moenner, Gabriel et al**
**Societé l'Air Liquide**
**Service Brevets et Marques**
**75, Quai d'Orsay**
**75321 Paris Cédex 07 (FR)**

(56) Documents cités:
**WO-A-94/02821**          **DE-A- 3 928 679**

## Description

L'invention concerne un procédé de génération d'au moins un signal d'alerte relatif au niveau dans un réservoir de stockage d'un produit et à un dispositif pour la mise en oeuvre du procédé. Plus particulièrement, elle se situe dans le domaine de la distribution des produits en vrac tels que des gaz industriels, de l'essence, etc... qui sont stockés dans des réservoirs ou des stockages appropriés, installés sur des sites industriels chez des clients à proximité des installations consommatrices de ces produits.

Un fournisseur en charge du réapprovisionnement d'un parc de réservoirs de stockage est quotidiennement confronté au problème, qu'il doit réapprovisionner chaque réservoir avant que le stock de produit dans celui-ci soit épuisé tout en réduisant le coût global du réapprovisionnement du parc. Ces contraintes le conduisent à devoir optimiser chaque jour les trajets de sa flotte de véhicules de réapprovisionnement et à maximiser, si possible, les quantités livrées de produit lors de chaque passage des véhicules.

Cette optimisation du réapprovisionnement pose problème du fait que le profil de consommation des produits pour chaque site est a priori inconnu et que le nombre de véhicules de réapprovisionnement est limité.

Afin de remédier à ce problème, il est connu de visiter régulièrement les stockages sur les sites et de déclencher une livraison de produit au plus tard lorsque le stock tombe en dessous d'un certain seuil de réapprovisionnement fixé à l'avance.

Cette solution est contraignante et coûteuse car elle nécessite une intervention humaine régulière de la part du fournisseur puisque, dans un souci de qualité de service, l'intervention du client n'est pas souhaitable.

De plus, elle offre seulement une garantie de continuité de disponibilité du produit à condition que les points suivants soient remplis :

(1) Les visites doivent être assez fréquentes afin qu'entre deux visites, le niveau ne tombe pas de façon imprévisible en dessous du seuil préfixé, ce qui pourrait entraîner une rupture du stock.

(2) Le seuil de réapprovisionnement doit être suffisamment élevé pour pouvoir respecter les délais de livraison qui sont par exemple imposés par le fait que la flotte de véhicules du fournisseur ne permet de réapprovisionner qu'un nombre limité de réservoirs par jour.

Par ailleurs, on connaît des réservoirs de stockage de produits qui sont équipés d'un capteur de mesure du niveau du produit contenu dans le réservoir et d'un automate associé de transmission d'un signal d'alerte à un centre de réapprovisionnement du fournisseur. Cet automate compare les valeurs de niveau délivrées par le capteur à un seuil préfixé et transmet, au cas où la valeur mesurée est inférieure au seuil, un signal d'alerte au centre de réapprovisionnement.

Bien que cette solution résolve le point (1) susmentionné en remplaçant l'intervention humaine par un capteur associé à un automate, elle nécessite encore un seuil d'alerte élevé pour pouvoir respecter des délais susmentionnés de livraison. Par conséquent, l'optimisation du réapprovisionnement est loin d'être garantie étant donné que le choix d'un seuil d'alerte élevé, nécessaire pour laisser une marge de sécurité, lui est préjudiciable, et que la prévision des besoins de livraison est imprécise et difficile à obtenir. De plus, pour éviter une rupture de stock chez le client, le fournisseur est souvent amené à installer des réservoirs de stockage surdimensionnés, ce qui augmente d'une part le coût de distribution du produit et d'autre part l'encombrement du réservoir chez le client.

Il est également connu d'utiliser des logiciels de prévision exploitant les dates et les quantités livrées par stockage qui sont manuellement introduites dans une base de données par le fournisseur au retour des livraisons. Comme précédemment, on fixe un seuil de réapprovisionnement. Le programme extrapole les consommations connues pour calculer la date à laquelle le niveau de stockage du produit est susceptible de passer en dessous de ce seuil. Cette date sert à la planification des tournées de livraison du fournisseur.

Etant donné que les informations sont introduites manuellement, cette solution n'est pas fiable car des erreurs de transcription ou des oublis d'introduction de données sont facilement commises. Suite à une telle erreur, le fournisseur prévoit des livraisons soit trop tôt ce qui lui coûte cher puisque la quantité livrée de produit par passage est faible, ou soit trop tard, ce qui peut conduire à une rupture de stock et avoir des conséquence graves pour le client.

En outre, cette approche est seulement fondée sur les quantités consommées de produit et n'implique aucune connaissance des niveaux réels des stockages. Etant donné que le niveau de stockage n'est relevé qu'aux moments des livraisons, cette approche ne permet pas de réagir aux situations exceptionnelles qui se présentent par exemple lorsqu'un client décide de faire fonctionner son usine pendant un week-end ou lors de la réalisation d'heures supplémentaires exceptionnelles. Dans ce cas, le logiciel prévoit une consommation inférieure à la consommation réelle, ce qui peut conduire à une rupture du stock s'il n'y a pas une intervention humaine. Par conséquent, les dates de livraison calculées par ce logiciel peuvent induire le fournisseur dans l'erreur dans la planification des tournées de ses véhicules. Pour pouvoir assurer tout de même la continuité de fourniture, le seuil de réapprovisionnement doit donc non seulement tenir compte du délai de livraison mais également d'éventuelles variations des quantités consommées de produit qui ne peuvent pas être prises en compte par cette approche.

Du fait de cette incertitude, cette approche est en général appliquée de manière très conservatrice avec des seuils de sécurité élevés, ce qui nuit à l'optimisation du réapprovisionnement par passage de véhicule, et peut conduire le fournisseur à installer des réservoirs surdimensionnés chez le client.

Par ailleurs, l'historique des consommations sur la base duquel sont effectuées les prévisions pour l'ensemble du parc de stockages est en général enregistré dans une banque de données ou un fichier centralisés. Le système est de fait vulnérable à une perte de données.

L'invention vise à pallier ces divers inconvénients en proposant un procédé et un dispositif pour la mise en oeuvre du procédé, qui permettent de générer un signal d'alerte anticipé à l'aide duquel le fournisseur peut prévoir avec plus de précision la date de réapprovisionnement d'un réservoir en vue de l'optimisation du réapprovisionnement d'un parc de réservoirs de stockage.

A cet effet, l'invention a pour objet un procédé de génération d'au moins un signal d'alerte relatif au niveau dans un réservoir de stockage d'un produit en vue du réapprovisionnement du réservoir, dans lequel on détermine au moyen d'au moins un capteur de mesure associé au réservoir à des instants successifs $t_0$, $t_1$... $t_{i-1}$, $t_i$ respectivement les valeurs $N_0$, $N_1$... $N_{i-1}$, $N_i$ du niveau de stockage du produit dans le réservoir, ainsi que les valeurs de la quantité de produit $\Delta N_1$, $\Delta N_2$,... $\Delta N_{i-1}$, $\Delta N_i$ consommées pendant les intervalles de temps définis par deux instants successifs $\Delta t_1 = t_1 - t_0$, $\Delta t_2 = t_2 - t_1$,... $\Delta t_{i-1} = t_{i-1} - t_{i-2}$, $\Delta t_i = t_i - t_{i-1}$, caractérisé par les étapes suivantes :

- on mémorise les valeurs mesurées $N_0$, $N_1$,... $N_{i-1}$, $N_i$ ainsi que $\Delta N_1$, $\Delta N_2$,... $\Delta N_{i-1}$, $\Delta N_i$ et les instants de mesure associés $t_0$, $t_1$... $t_{i-1}$, $t_i$, - à des instants successifs $\tau_0$, $\tau_1$... $\tau_{j-1}$, $\tau_j$ qui sont respectivement espacés d'intervalles de temps $\Delta \tau_1 = \tau_1 - \tau_0$, $\Delta \tau_2 = \tau_2 - \tau_1$,... $\Delta \tau_j = \tau_j - \tau_{j-1}$, les intervalles de temps $\Delta \tau$ étant prédéfinis et leur durée étant supérieure ou égale aux intervalles de temps $\Delta t_n$, n étant un nombre naturel quelconque compris entre 0 et i, on calcule à partir des valeurs mémorisées de la quantité consommée de produit $\Delta N_n$ pendant les intervalles de temps $\Delta t_n$, une valeur de la quantité estimée de produit $C_k$ qui sera consommée entre l'instant $\tau_j$ et l'instant $\tau_{j+k}$, $\tau_{j+k}$ étant le k ème instant suivant $\tau_j$ et espacé de celui-ci de l'intervalle de temps $\delta \tau_k = \Delta \tau_{j+1} + \Delta \tau_{j+2} + ... + \Delta \tau_{j+k}$,
- on soustrait cette valeur $C_k$ de la valeur mesurée $N_i$ la plus récente pour obtenir une valeur estimée $N_i - C_k$ du niveau de stockage à l'instant $\tau_{j+k}$,
- on compare cette valeur estimée $N_i - C_k$ du niveau de stockage à un seuil $\theta$ préfixé, et
- on génère un signal d'alerte si la valeur estimée $N_i - C_k$ est inférieure au seuil $\theta$ préfixé.

Le procédé selon l'invention peut de plus comporter une ou plusieurs des caractéristiques suivantes :

- on détermine les valeurs de la quantité de produit $\Delta N_n$ consommée pendant l'intervalle de temps $\Delta t_n$ en soustrayant de la valeur $N_{n-1}$ du niveau de stockage mesurée à l'instant $t_{n-1}$ la valeur $N_n$ du niveau de stockage mesurée à l'instant $t_n$,
- on détermine la valeur de la quantité de produit $\Delta N_n$ consommée pendant l'intervalle de temps $\Delta t_n$ en mesurant au moyen d'un second capteur le débit de produit prélevé du réservoir et en intégrant ce débit mesuré entre les instants $t_{n-1}$ et $t_n$,

L'invention a également pour objet un dispositif de génération d'au moins un signal d'alerte permettant la mise en oeuvre du procédé défini ci-dessus, caractérisé en ce qu'il comprend des moyens de mesure du niveau de stockage du produit, une unité centrale pour exploiter le niveau relevé par les moyens de mesure, une mémoire reliée à l'unité centrale et destinée à mémoriser les instants $t_n$ de mesure délivrés par une horloge, les niveaux de stockage du produit $N_n$ dans le réservoir et les quantités de produit $N_n$ consommées pendant les intervalles de temps $\Delta t_n$, des moyens de mémorisation d'au moins un seuil $\theta$ de niveau de stockage, des moyens de comparaison de la valeur du niveau de stockage $N_i - C_k$ à l'instant futur $\tau_{j+k}$ délivrée par l'unité centrale avec ledit seuil $\theta$, et des moyens de génération d'un signal d'alerte, commandés par les moyens de comparaison.

L'invention a en outre pour objet un réservoir de stockage d'un produit, caractérisé en ce qu'il comporte un dispositif du type défini ci-dessus.

D'autres caractéristiques et avantages de l'invention ressortiront de la description suivante, donnée à titre d'exemple sans caractère limitatif en regard des dessins annexés, sur lesquels :

La figure 1 est un schéma synoptique du dispositif selon l'invention installé sur un réservoir de stockage d'un gaz liquéfié,
La figure 2 est un exemple de réalisation d'un écran d'une unité d'affichage du dispositif selon l'invention,
La figure 3 est une échelle de temps montrant des instants importants pour le déroulement du procédé selon l'invention, et
La figure 4 est un diagramme montrant un exemple d'une courbe de consommation en fonction du temps d'un réservoir auquel on applique le procédé selon l'invention.

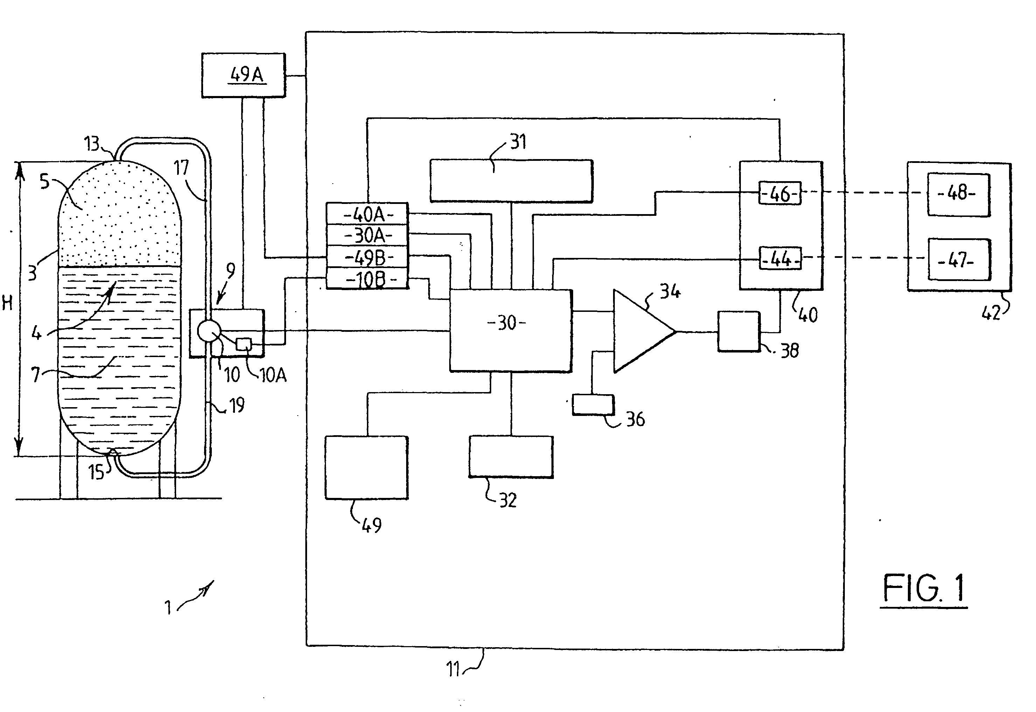

Sur la figure 1 est représenté un dispositif 1 de génération d'un signal d'alerte selon l'invention. Ce dispositif 1 est installé sur un réservoir 3 contenant par exemple un gaz liquéfié 4 présentant une phase vapeur 5 et une phase liquide 7.

Le dispositif 1 comprend des moyens 9 de mesure du niveau de stockage du gaz liquéfié 4, et une unité 11 de traitement des signaux délivrées par les moyens 9 de mesure.

Les moyens 9 comprennent un capteur 10 de mesure d'une part de la pression absolue régnant dans le réservoir 3 et d'autre part de la pression différentielle entre un point haut 13 et un point bas 15 du réservoir 3. A cet effet, le capteur 10 est relié à ces points haut 13 et bas 15 par respectivement un capillaire 17, 19. Un tel capteur nécessite un étalonnage régulier du fait des dérives dans le temps de la référence "zéro". C'est pourquoi les moyens 9 de mesure sont en outre équipés d'une unité d'étalonnage 10A du capteur 10.

L'unité 11 comprend une unité centrale 30 reliée au capteur 10 pour exploiter les signaux délivrés par celui-ci, une mémoire 31 reliée à l'unité centrale 30 et destinée à mémoriser des valeurs qui correspondent à des instants de mesure délivrés par une horloge 32, des valeurs du niveau de stockage du produit associées à ces instants de mesure ainsi que des valeurs qui correspondent aux quantités de produit consommées entre deux instants successifs de mesure.

En outre, l'unité 11 de traitement comprend des moyens de comparaison 34 dont une entrée est reliée à l'unité centrale 30 et dont une autre entrée est reliée à des moyens de mémorisation 36 de seuils d'alerte correspondant chacun à un niveau prédéfini de stockage de produit.

Une sortie des moyens de comparaison 34 est reliée à des moyens 38 de génération d'un signal d'alerte. En fonction du résultat de comparaison, les moyens de comparaison 34 envoient à ces moyens 38 une commande pour générer le signal d'alerte.

Les moyens 11 de traitement comportent en outre des moyens de communication 40 du dispositif 1 avec un centre 42 de réapprovisionnement qui est éloigné du réservoir 3, par exemple dans une autre ville. Ces moyens 40 de communication comprennent d'une part des moyens de transmission 44 et d'autre part des moyens de réception 46 d'informations respectivement en direction ou en provenance du centre de réapprovisionnement 42 qui coopèrent avec des unités correspondantes 47 et 48 du centre de réapprovisionnement.

Les moyens de transmission 44 sont reliés à une sortie des moyens 38 de génération d'un signal d'alerte pour transmettre, en fonction d'une commande reçue par ces moyens 38, le signal d'alerte généré au centre 42. La réception d'un tel signal d'alerte par le centre 42 équivaut la réception d'une commande de réapprovisionnement du réservoir 3. En outre, les moyens 44 de transmission sont reliés à l'unité centrale 30 afin de transmettre des informations supplémentaires, calculées par cette unité 30 telles qu'une date avant laquelle une livraison de produit doit intervenir, et la quantité estimée de produit pouvant être introduite dans le réservoir 3 à la date susmentionnée, au centre 42.

Les moyens 46 de réception sont reliés à l'unité centrale 30 afin de transmettre à celle-ci des informations reçues du centre 42 notamment des informations reçues en réponse à l'enregistrement par celui-ci d'une commande de réapprovisionnement telles qu'un accusé de réception et un délai prévu de livraison.

Avantageusement, le dispositif 1 est équipé d'une alimentation électrique de secours 49A telle qu'une batterie qui, en cas de panne d'électricité, permet d'assurer la continuité de fonctionnement du dispositif 1 en fournissant l'énergie électrique nécessaire aux moyens de mesure 9 et à l'unité de traitement 11.

Pour informer un utilisateur sur l'état du réservoir 3 et sur l'état de fonctionnement du dispositif 1, l'unité de traitement 11 comprend d'une part divers moyens de contrôle de l'état de fonctionnement des unités et moyens du dispositif 1 et d'autre part une unité d'affichage 49 d'informations particulières, notamment d'informations reçues du centre 42 et d'informations relevées par les moyens de contrôle et par les moyens de mesure 9. Cette unité d'affichage 49 est commandée par une partie de l'unité centrale 30.

En ce qui concerne les moyens de contrôle d'état, le dispositif comprend plus particulièrement des moyens 30A de contrôle de l'état de fonctionnement de l'unité centrale 30, des moyens 40A de contrôle de l'état de fonctionnement des moyens de communication 40, des moyens 49B de contrôle de l'état de fonctionnement de l'alimentation électrique de secours 49A, des moyens 10B de contrôle de l'état de fonctionnement de l'unité d'étalonnage 10A. En vérifiant la validité des signaux délivrés par le capteur 10, l'unité centrale 30 constitue en plus un moyen de contrôle de l'état de fonctionnement du capteur 10. En vue de l'affichage des informations relevées sur l'unité d'affichage 49, les moyens de contrôle 10B, 30A, 40A et 49B sont reliés chacun à l'unité centrale 30.

L'unité 49 est de préférence un afficheur à cristaux liquides équipé d'un écran à éclairage par l'arrière qui s'adapte automatiquement à la luminosité de l'environnement dans lequel se trouve l'écran. Un afficheur à cristaux liquides présente l'avantage qu'il peut fonctionner dans une large gamme de températures et même sous des conditions météorologiques difficiles, ce qui permet de l'installer ensemble avec le dispositif à l'extérieur.

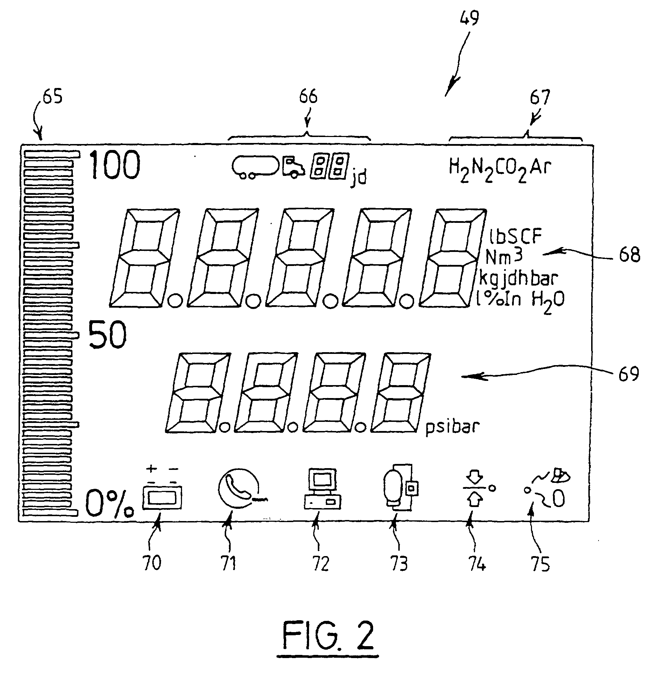

La figure 2 montre un exemple de réalisation de la présentation d'écran d'une telle unité 49 d'affichage.

L'écran de l'unité d'affichage 49 est subdivisé en différentes zones 65 à 75 affichant chacune, en fonction des commandes reçues de l'unité centrale 30, une seule information. Par le fait que des informations identiques s'affichent sur cet écran toujours au même emplacement, le client peut identifier rapidement l'état du réservoir 3 et l'état de fonctionnement du dispositif lui-même.

Par la suite, on va décrire en détail les différentes zones d'affichage de l'unité 49 ainsi que les informations qui y sont affichées.

Dans la partie gauche de l'écran est située une zone 65 d'affichage du niveau de stockage de produit contenu dans le réservoir 3. Cette zone 65 d'affichage de niveau est réalisé sous la forme d'un affichage incrémental en pour-cent allant de 0 à 100% de taux de remplissage du réservoir 3 et s'étendant sur toute la hauteur de l'écran. Cette zone 65 est constamment en fonctionnement et la valeur affichée est rafraîchie après chaque mesure du niveau de stockage.

Dans la partie centrale supérieure de l'écran est disposée une zone 68 d'affichage numérique soit du niveau de stockage de produit en une unité définie à l'avance telle que lb, SCF, $Nm^3$, kg ...., soit de l'autonomie du réservoir 3. Par l'autonomie du réservoir 3, on entend la durée estimée en heures ou en jours jusqu'à l'épuisement du stock de produit. Cette durée est calculée par l'unité centrale 30 sur la base des consommations enregistrées dans la mémoire 31.

Dans la partie centrale inférieure de l'unité 49, est prévue une zone 69 d'affichage de la pression absolue régnant dans le réservoir 3, ceci dans une unité prédéfinie à l'avance.

Au dessus de la zone 68, sur la partie droite de l'écran, est prévue une zone 67 d'affichage permanent du type de produit, par exemple $H_2, N_2$, $CO_2$ ou Ar, stocké dans le réservoir 3.

Au dessus de la zone 68 et entre les zones 65 et 67 est située une zone 66 d'affichage d'un message signalant la réception d'un accusée de réception. Cet affichage comporte deux parties, une première montrant un dessin d'un camion de réapprovisionnement et une seconde pour afficher un délai de livraison en jours. En effet, après avoir reçu la commande de réapprovisionnement envoyée par le dispositif 1, le centre de réapprovisionnement 42 envoie au dispositif un accusée de réception pour signaler l'enregistrement de cette commande, et un délai estimé ou réel de livraison. Ainsi, le client est en mesure de prendre toutes les dispositions nécessaires pour la livraison, par exemple un arrêt des installations alimentées par le réservoir.

En dessous de la zone 69, à droite de la zone 65 sont disposées l'une à côté de l'autre, des zones 70 à 75 d'affichage d'informations relevées par les moyens de contrôle 10B,30,30A,40A et 49B.

La zone 70 affiche le dessin d'une batterie quand le dispositif a détecté une panne d'électricité et fonctionne à l'aide de l'électricité délivrée par la batterie. On prévoit en outre que le dessin de la batterie de la zone 70 clignote si les moyens de contrôle 49B ont détecté que l'énergie électrique emmagasinée dans la batterie 49A est à peu près épuisée.

Dans la zone 71 est représenté un dessin montrant, dans un cercle, un combiné de téléphone. Ce dessin est affiché par l'écran quand les moyens de communication 40 transfèrent ou reçoivent des informations respectivement vers ou du centre 42 de réapprovisionnement. Par ailleurs, on prévoit en outre un affichage de ce dessin en mode de clignotement lent et un autre en mode de clignotement rapide. Le mode de clignotement lent est déclenché quand les moyens de transmission 44 ont reçu de la part des moyens 38 une commande de transmission d'un signal d'alerte au centre 42, mais ne peuvent pas établir une liaison de communication avec celui-ci. Le mode de clignotement rapide est déclenché quand les moyens de contrôle 40A des moyens de communication 40 ont détecté une défaillance des moyens de communication 40.

Dans la zone 72 est représenté un dessin montrant un ordinateur. Ce dessin est affiché en permanence si les moyens 30A ont relevé le bon fonctionnement de l'unité centrale 30. Quand l'unité 30 est en train d'être initialisée, par exemple suite à une commande reçue du centre 42, ce dessin clignote lentement. Dans le cas où les moyens de contrôle 30A ont décelé qu'une erreur est survenue dans le fonctionnement de l'unité 30, le dessin clignote rapidement.

Dans la zone 73 est représenté le dessin symbolisant le réservoir 3 équipé du capteur 10 de mesure. Quand l'écran affiche ce dessin en permanence, l'unité centrale 30 qui contrôle les signaux délivrés par le capteur 10 d'un point de vue validité, estime que celui-ci fonctionne normalement. Si le capteur délivre des signaux incohérents et donc non-valides, ce dessin est affiché dans un mode de clignotement lent. Par contre si le capteur délivre plus de signaux du tout, ce dessin est affiché dans un mode de clignotement rapide montrant au client que le capteur est défaillant.

Dans la zone d'affichage 74 est représenté un dessin montrant deux flèches opposées, dirigées en direction d'un trait marquant une référence "zéro". Ce dessin est affiché en permanence, lors d'un étalonnage de la référence "zéro" du capteur 10 par l'unité 10A. Si un tel étalonnage doit être refait, ce dessin est affiché dans un mode clignotant lentement. Si l'unité d'étalonnage 10A est défaillante, ce dessin est affiché dans un mode clignotant rapidement.

Par ailleurs, on prévoit de relier le dispositif selon l'invention à d'autre terminaux de surveillance. A cet effet, quand le dispositif transmet des informations en direction d'un tel terminal supplémentaire, le dessin de la zone 75 montrant un point relié d'un part à un terminal et d'autre part à un réservoir, s'affiche.

Avantageusement, l'unité 11 de traitement des signaux délivrés par le capteur 10 est réalisée sous la forme d'un ordinateur chargé d'un programme adapté et équipé d'une carte de conversion analogique-numérique des signaux du capteur 10 et d'un modem pour la transmission et la réception, par exemple via un réseau téléphonique, d'informations respectivement en direction ou en provenance du centre de réapprovisionnement 42.

Le capteur 10 mesure d'une part la pression absolue P régnant dans le réservoir et d'autre part la pression différentielle $DP_c$ entre les deux capillaires 17 et 19 auxquels il est relié. Cette pression différentielle $DP_c$ est en relation avec les pressions $P_T^+$ au niveau du point haut 13 et $P_T$ au niveau du point bas 15 du réservoir par la relation suivante :

où $\rho_{vo}$ est la masse volumique du gaz à une pression absolue $P_o$ donnée,

$$P_T^+ - P_T^- = DP_c + \frac{P}{P_0}\rho_{v0}gH$$

g est l'accélération de la pesanteur, et
H est la hauteur du réservoir 3 entre les points haut 13 et bas 15.

La différence de pression ($P_T^+ - P_T^-$) représente le poids par unité de surface d'une colonne comprenant les deux phases, la phase liquide 7 et la phase gazeuse 5, du gaz liquifié 4 dans le réservoir 3. Elle est donc directement proportionnelle à la quantité totale du produit contenue dans le réservoir 3. On obtient cette dernière, c'est-à-dire le niveau de stockage du produit dans le réservoir, par exemple par une courbe d'étalonnage établie à l'avance et qui prend en compte la variation de la section transversale du réservoir dans la direction de sa hauteur, notamment dans la partie du dôme et la partie de fond du réservoir 3.

On pourra se référer, sur ce sujet, au document FR-A-2554230, au nom de la demanderesse.

Dans un autre mode de réalisation, qui est plus adapté à un réservoir de stockage d'un liquide à température ambiante, on prévoit d'équiper ce réservoir de stockage d'un débitmètre mesurant de façon quasi-continue la quantité de produit prélevée du réservoir. Afin de mesurer la quantité de produit consommée entre deux instants successifs, on intègre les quantités de produit prélevées du réservoir entre les deux instants successifs. Dans le cas où la quantité totale $N_{tot}$ de produit pouvant être stockée dans le réservoir est connue et enregistrée dans l'unité de traitement 11, on prévoit de déduire à partir de cette quantité $N_{tot}$ et les quantités de produit prélevées du réservoir le niveau de stockage du produit dans le réservoir.

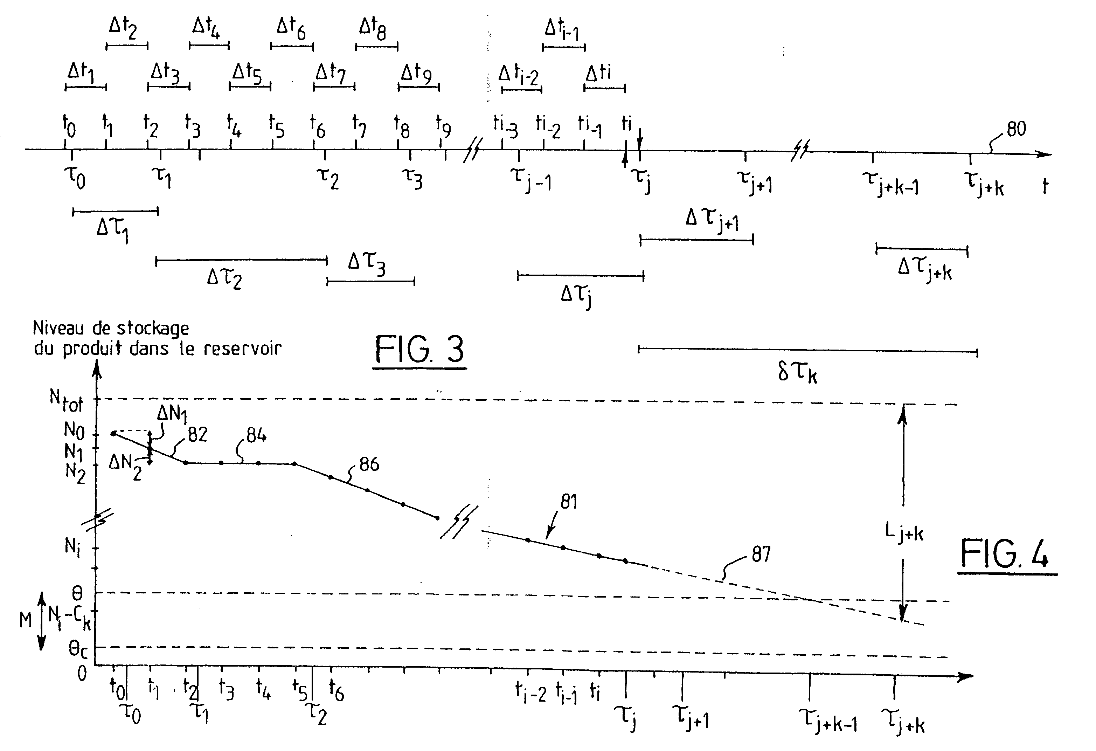

En regard des figures 3 et 4, on expliquera ci-après le fonctionnement du dispositif représenté sur la figure 1 ainsi que le procédé de génération d'au moins un signal d'alerte selon l'invention.

Sur la figure 3 est représentée une échelle temps 80. Sur cette échelle temps sont indiqués des instants successifs $t_0, t_1... t_{i-1}, t_i$ (i étant un nombre naturel quelconque). Ces instants sont délivrés par l'horloge 32 du dispositif selon l'invention. A ces instants successifs $t_n$ qui sont espacés d'intervalles de temps $\Delta t_n$ égaux (n étant un nombre naturel compris entre 0 et i), $\Delta t_1 = t_1 - t_0, \Delta t_2 = t_2 - t_1, ..., \Delta t_{i-1} = \Delta t_{i-1} - \Delta t_{i-2}, \Delta t_i = t_i - t_{i-1}$, l'unité centrale 30 détermine à partir des signaux délivrés par le capteur 10 de pression différentielle selon la façon décrite ci-dessus, les valeurs $N_0, N_1,... N_{i-1}, N_i$ du niveau de stockage du produit dans le réservoir 3. De plus, l'unité 30 calcule aussi les valeurs de la quantité de produit $\Delta N_1, \Delta N_2,..., \Delta N_{i-1}, \Delta N_i$ consommées pendant les intervalles de temps $\Delta t_n$. Sur cette échelle 80, $t_i$ est l'instant de mesure le plus récent.

La durée des intervalles de temps $\Delta t_n$ est choisie en fonction de la taille du réservoir 3 et des quantités prélevées de produit par des installations consommatrices raccordées en aval du réservoir. En effet, la durée de l'intervalle de temps doit d'une part être assez courte pour pouvoir suivre l'évolution du niveau de stockage de produit dans le réservoir, et d'autre part assez longue pour que la variation du niveau de stockage puisse être mesurée de façon fiable par le capteur 10. Indépendamment de ces considérations, la Demanderesse a trouvé qu'une durée des intervalles de temps $\Delta t_n$ inférieure à deux heures, de préférence égale à une heure et typiquement égale à trente minutes convient à la plupart des réservoirs de stockage.

Sur la figure 4, on a représenté sur un graphique un exemple d'un ensemble de mesures du niveau de stockage du produit en fonction du temps. Sur l'abscisse qui représente l'échelle de temps, sont également rapportés les instants de mesure $t_n$. Pour guider l'oeil, les points de mesure, c'est à dire les niveaux $N_n$ mesurés aux instants associés $t_n$, sont reliés par des segments de droites formant une courbe 81. Sur l'ordonnée qui représente l'échelle du niveau de stockage de produit dans le réservoir, on a représenté, outre les niveaux $N_n$ mesurés aux instants $t_n$, la quantité totale $N_{tot}$ de produit pouvant être stockée dans le réservoir, et deux seuils $\theta$ et $\theta_c$ mémorisés dans les moyens de mémorisation 36 et servant respectivement à la génération d'un signal d'alerte selon le procédé de l'invention.

Sur la courbe 81, on distingue différents types de consommation. Par exemple sur une première portion 82 de la courbe 81 entre les instants $t_o$ et $t_2$, la quantité $\Delta N_1 + \Delta N_2$ de produit est consommée. Ensuite, entre $t_2$ et $t_5$, sur la portion 84 de la courbe, le niveau de stockage du produit reste constant. Une telle situation correspond notamment à un arrêt de l'installation branchée en aval du réservoir, ce qui peut par exemple être le cas lors d'un incident technique ou lors d'un jour non ouvré, comme par exemple le week-end. Ensuite sur la portion suivante 86 de la courbe, la consommation de produit reprend.

Conformément au procédé selon l'invention, les valeurs $N_n$ de niveau, les instants $t_n$ correspondants ainsi que les quantités de produit $\Delta N_n$ consommées pendant les intervalles de temps $\Delta t_n$ sont mémorisées dans la mémoire 31 de l'unité 11.

Avantageusement, dans la mémoire 31 de l'unité 11, seul un nombre prédéfini de valeurs $N_n, t_n$ et $\Delta N_n$ est mémorisé, et l'unité centrale 30 remplace, une fois ce nombre prédéfini atteint, les valeurs les plus anciennes par les valeurs les plus récentes. Ainsi, les estimations et calculs de l'unité centrale 30 s'effectuent toujours sur une base de données constamment actualisée et reflètant le mieux le comportement de consommation du produit pour le réservoir en question.

Sur l'échelle de temps 80 de la figure 3 ainsi que sur l'abscisse du graphique de la figure 4 sont en outre représentés des instants successifs $\tau_0$, $\tau_1$,... $\tau_{j-1}$, $\tau_j$, $\tau_{j+1}$, ... $\tau_{j+k-1}$ et $\tau_{j+k}$ (j et k étant des nombres naturels quelconques), parmi ces instants, $\tau_j$ est l'instant le plus récent, les instants $\tau_{j+1}$, ... $\tau_{j+k-1}$ et $\tau_{j+k}$ étant des instants futurs. Ces instants sont envoyés à l'unité centrale 30 par l'horloge 32 et respectivement espacés d'intervalles de temps prédéfinis $\Delta\tau_1 = \tau_0 - \tau_1$, $\Delta\tau_2 = \tau_2 - \tau_1$, ... $\Delta\tau_j = \tau_j - \tau_{j-1}$, etc.. $\tau_{j+k}$ est le k$^{ème}$ instant suivant $\tau_j$ et espacé de celui-ci de l'intervalle de temps $\delta\tau_k = \Delta\tau_{j+1} + \Delta\tau_{j+2} + ... + \Delta\tau_{j+k}$.

Les instants $\tau_1$ (l étant un nombre naturel compris entre 0 et j+k) correspondent à un moment donné d'un jour ouvré, par exemple à 0h15, où l'unité centrale 30 effectue, à partir des valeurs mémorisées dans la mémoire 31, une projection des consommations et niveaux de stockage futurs. L'expression "jour ouvré" signifie dans ce contexte un jour où le centre 42 peut livrer une quantité de produit pour réapprovisionner le réservoir 3, par exemple du lundi au vendredi. Par opposition, un "jour non-ouvré" correspond à un jour où le centre 42 ne peut pas livrer, par exemple les jours de weekend ou des jours fériés. On comprend donc que les instants successifs $\tau_l$ sont espacés d'intervalles de temps $\Delta\tau_l$ dont la durée varie selon qu'il y a un par exemple un jour férié entre deux instants successifs $\tau_1$ ou non.

La durée des intervalles de temps $\Delta\tau_l$ est choisie supérieure ou égale aux intervalles de temps $\Delta t_n$. Avantageusement, l'intervalle de temps $\Delta\tau_l$ est un multiple d'une part des intervalles de temps $\Delta t_n$ et d'autre part de 24 heures.

La durée de l'intervalle de temps $\delta\tau_k$ correspond à un délai de livraison du centre 42 de réapprovisionnement. Cette durée est par exemple de trois jours ouvrés et correspond au temps dont le fournisseur a besoin pour planifier les tournées de son parc de véhicules de réapprovisionnement.

Aux instants $\tau_l$, l'unité centrale 30 calcule dans un premier temps, à partir des valeurs mémorisées de la quantité de produit $\Delta N_n$ consommée pendant les intervalles de temps $\Delta t_n$, une valeur de la quantité estimée de produit $C_k$ qui sera consommée entre l'instant $\tau_j$ et l'instant $\tau_{j+k}$.

Le calcul de $C_k$ s'effectue par exemple en déterminant parmi toutes les valeurs mémorisées, les consommations de produit sur des périodes d'une durée de $\delta\tau_k$ et en calculant la moyenne de ces consommations. Bien entendu, dans ce calcul de $C_k$, l'unité 30 prend en compte si dans la période $\delta\tau_k$ se trouvent des jours de non-fonctionnement des installation consommatrices raccordées en aval du réservoir.

Dans un second temps, l'unité centrale 30 soustrait cette valeur $C_k$ de la dernière valeur mesure $N_i$ pour obtenir une valeur estimée $N_i - C_k$ du niveau de stockage à l'instant $\tau_{j+k}$. Cette valeur estimée est représentée sur le graphique de la figure 4 et est reliée à la valeur $N_i$ mesurée à l'instant $t_i$ par une ligne 87 formée de traits

Ensuite, elle délivre cette valeur estimée $N_i - C_k$

à aux moyens de comparaison 34 qui comparent cette valeur estimée $N_i - C_k$ du niveau de stockage au seuil $\theta$ préfixé. Si la valeur estimée $N_i - C_k$ est inférieure au seuil $\theta$, les moyens de comparaison 34 envoient un signal de commande aux moyens 38 qui génèrent un signal d'alerte. Ce signal d'alerte est transmis au centre 42 par l'intermédiaire des moyens de transmission 44. Dans ce cas, le centre 42 est alerté que le réservoir 3 doit être réapprovisionner sous un délai $\delta\tau_k$.

Avantageusement, le seuil $\theta$ se compose d'un seuil critique $\theta_c$ de rupture de stock et d'une marge M comme cela est représenté sur la figure 3. Le seuil critique $\theta_c$ correspond par exemple à une consommation journalière typique. Une fois que le niveau est passé en dessous de ce seuil, un rupture de stock risque donc d'intervenir dans la journée. C'est pourquoi, pour une meilleure sécurité, les moyens 38 génèrent un signal d'alerte d'urgence si la valeur estimée $N_i - C_1$ est inférieure ou égale à ce seuil critique $\theta_c$, $C_1$ étant la quantité estimée de produit consommée entre deux instants $\tau_1$ successifs, c'est-à-dire pendant un intervalle de temps $\delta\tau_1 = \Delta\tau_{j+1}$. Ce signal d'urgence est immédiatement transmis par les moyens 44 aux centre 42 pour l'informer qu'un réapprovisionnement du réservoir doit être effectué le plus rapidement possible. Toutefois, un tel cas d'urgence ne peut se produire que si les instants $\tau_l$ sont choisis de façon trop espacés les uns des autres, où si une très forte consommation de produit est intervenue de façon imprévue.

La marge M est déterminée par une exploitation statistique des valeurs $\Delta N_n$ mémorisées. Dans cette exploitation statistique, la marge M est choisie de façon à ce que la probabilité que le niveau de stockage passe en dessous de $\theta_c$ à l'instant $\tau_{j+k-1}$ est à peu près égale à zéro.

La réception d'un signal d'alerte par le centre 42 équivaut une commande de livraison de la part du client chez qui est installé le réservoir 3. Pour informer le client que le signal d'alerte a bien été reçu, et qu'une commande de livraison a été enregistrée, le centre 42 envoi un signal d'accusé de réception qui est reçu par les moyens de réception du dispositif 1, et qui est affiché sur l'unité d'affichage 49.

Dans le cas où les moyens 38 génèrent un signal d'alerte, l'unité centrale 30 calcule à l'instant $\tau_j$ également une estimation de la quantité $L_{j+k}$ de produit pouvant être mise dans le réservoir lors d'un réapprovisionnement de ce dernier à l'instant $\tau_{j+k}$. Cette quantité estimée est calculée selon la relation suivante :

$$L_{j+k} = N_{tot} - (N_l - C_k)$$

Ensemble avec le signal d'alerte, un signal correspondant à cette quantité $L_{j+k}$ ainsi qu'un signal correspondant à l'instant $\tau_{j+k}$ sont transmis par les moyens de transmission 44 au centre 42 de réapprovisionnement Ainsi, le fournisseur est non seulement informé qu'un réservoir doit être réapprovisionné, mais aussi de la quantité de produit qu'il peut livrer à un instant $\tau_{j+k}$.

Par conséquent, il détient toutes les informations nécessaires pour planifier de façon optimale les tournées de ses véhicules de réapprovisionnement et pour maximiser la quantité à livrer lors de chaque passage de livraison. Le procédé et le dispositif pour sa mise en oeuvre permettent donc de fixer des seuils d'alerte qui sont considérablement inférieurs aux seuils d'alerte des dispositifs connus décrit dans le préambule, et de réduire le coût de distribution du produit de façon importante.

Les valeurs mémorisées $N_n$, $\Delta N_n$ et $t_n$ forment une base de données. Avantageusement, pour rendre compte de comportements de consommation très différents, par exemple les consommations liées à des activités saisonnières, on constituent pour chaque type de fonctionnement une base adaptée de données de valeurs $N_n$, $\Delta N_n$ et $t_n$, mémorisée dans la mémoire 30 de l'unité de traitement 11. En fonction d'une commande qui est par exemple envoyée par le centre 42, l'unité centrale 30 prend en compte la base de données associée à la période caractéristique en cours pour calculer les valeurs des quantités estimées de produit.

## Revendications

1. Procédé de génération d'au moins un signal d'alerte relatif au niveau dans un réservoir (3) de stockage d'un produit (4) en vue du réapprovisionnement du réservoir (3), dans lequel on détermine au moyen d'au moins un capteur (10) de mesure associé au réservoir (3) à des instants successifs $t_0$, $t_1$... $t_{i-1}$, $t_i$ respectivement les valeurs $N_0$, $N_1$... $N_{i-1}$, $N_i$ du niveau de stockage du produit dans le réservoir (3), ainsi que les valeurs de la quantité de produit $\Delta N_1$, $\Delta N_2$,... $\Delta N_{i-1}$, $\Delta N_i$ consommées pendant les intervalles de temps définis par deux instants successifs $\Delta t_1 = t_1 - t_0$, $\Delta t_2 = t_2 - t_1$,... $\Delta t_{i-1} = t_{i-1} - t_{i-2}$, $\Delta t_i = t_i - t_{i-1}$, comprenant les étapes suivantes :

   - on mémorise les valeurs mesurées $N_0$, $N_1$,... $N_{i-1}$, $N_i$ ainsi que $\Delta N_1$, $\Delta N_2$,... $\Delta N_{i-1}$, $\Delta N_i$ et les instants de mesure associés $t_0$, $t_1$... $t_{i-1}$, $t_i$,
   - à des instants successifs $\tau_0$, $\tau_1$... $\tau_{j-1}$, $\tau_j$ qui sont respectivement espacés d'intervalles de temps $\Delta \tau_1 = \tau_1 - \tau_0$, $\Delta \tau_2 = \tau_2 - \tau_1$,... $\Delta \tau_j = \tau_j - \tau_{j-1}$, les intervalles de temps $\Delta\tau$ étant prédéfinis et leur durée étant supérieure ou égale aux intervalles de temps $\Delta t_n$, n étant un nombre naturel quelconque compris entre 0 et i, on calcule à partir des valeurs mémorisées de la quantité consommée de produit $\Delta N_n$ pendant les intervalles de temps $\Delta t_n$, une valeur de la quantité estimée de produit $C_k$ qui sera consommée entre l'instant $\tau_j$ et l'instant $\tau_{j+k}$, $\tau_{j+k}$ étant le k ème instant suivant $\tau_j$ et espacé de celui-ci de l'intervalle de temps

   $$\delta\tau_k = \Delta\tau_{j+1} + \Delta\tau_{j+2} + ... + \Delta\tau_{j+k},$$

   - on soustrait cette valeur $C_k$ de la valeur mesurée $N_i$ la plus récente pour obtenir une valeur estimée $N_i - C_k$ du niveau de stockage à l'instant $\tau_{j+k}$,
   - on compare cette valeur estimée $N_i - C_k$ du niveau de stockage à un seuil $\theta$ préfixé, et
   - on génère un signal d'alerte si la valeur estimée $N_i - C_k$ est inférieure au seuil $\theta$ préfixé.

2. Procédé selon la revendication 1, **caractérisé en ce que** l'on détermine les valeurs de la quantité de produit $\Delta N_n$ consommée pendant l'intervalle de temps $\Delta t_n$ en soustrayant de la valeur $N_{n-1}$ du niveau de stockage mesurée à l'instant $t_{n-1}$ la valeur $N_n$ du niveau de stockage mesurée à l'instant $t_n$.

3. Procédé selon la revendication 1, **caractérisé en ce que** l'on détermine la valeur de la quantité de produit $\Delta N_n$ consommée pendant l'intervalle de temps $\Delta t_n$ en mesurant au moyen d'un second capteur le débit de produit prélevé du réservoir et en intégrant ce débit mesuré entre les instants $t_{n-1}$ et $t_n$.

4. Procédé selon l'une quelconque des revendications 1 à 3, **caractérisé en ce que** tous les intervalles $\Delta t_n$ sont égaux.

5. Procédé selon l'une quelconque des revendications 1 à 4, **caractérisé en ce que** la durée des intervalles de temps $\Delta t_n$ est inférieure à deux heures, de préférence inférieure à une heure et notamment égale à 30 minutes.

6. Procédé selon l'une quelconque des revendications 1 à 5, **caractérisé en ce que** les intervalles de temps $\Delta\tau_l$ sont des multiples des intervalles de temps $\Delta t_n$ et de préférence, $\Delta\tau_l$ est en outre égal à vingt-quatre heures ou un multiple de vingt-quatre heures, l étant un nombre naturel quelconque compris entre 0 et j+k.

7. Procédé selon l'une quelconque des revendications 1 à 6, **caractérisé en ce que** chaque instant $\tau_l$ correspond à un moment donné d'un jour ouvré d'un centre (42) de réapprovisionnement du réservoir (3).

8. Procédé selon l'une quelconque des revendications 1 à 7, **caractérisé en ce que** l'on mémorise la quantité totale de produit $N_{tot}$ pouvant être stockée dans ledit réservoir (3), et **en ce que** l'on calcule en outre aux instants $\tau_j$ une estimation de la quantité de produit $L_{j+k} = N_{tot} - N_i - C_k$) pouvant être mise dans le réservoir (3) lors d'un réapprovisionnement de ce dernier à l'instant $\tau_{j+k}$.

**9.** Procédé selon l'une quelconque des revendications 1 à 8, **caractérisé en ce que** la durée des intervalles de temps $\delta\tau_k$ correspond à un délai de livraison prédéfini.

**10.** Procédé selon l'une quelconque des revendications 1 à 9, **caractérisé en ce que** le seuil $\theta$ se compose d'un seuil critique $\theta_c$ de rupture de stock et d'une marge M, la marge M étant choisie de façon à ce que la probabilité que le niveau de stockage passe en dessous de $\theta_c$ à l'instant $\tau_{j+k-1}$ est à peu près égale à zéro.

**11.** Procédé selon la revendication 10, **caractérisé en ce que** l'on génère un signal d'alerte d'urgence si la valeur estimée $N_i-C_1$ est inférieure ou égale au seuil critique $\theta_c$, $C_1$ étant la quantité estimée de consommation entre deux instants successifs $\tau_l$.

**12.** Procédé selon l'une quelconque des revendications 1 à 11, **caractérisé en ce que** l'on transmet un signal d'alerte à un centre (42) de réapprovisionnement éloigné du réservoir (3) de stockage.

**13.** Procédé selon la revendication 8 ensemble avec la revendication 12, **caractérisé en ce que** l'on transmet avec le signal d'alerte, un signal correspondant à la quantité estimée de produit $L_{j+k}$ pouvant être mise dans le réservoir lors d'un réapprovisionnement du réservoir (3) à l'instant $\tau_{j+k}$.

**14.** Procédé selon la revendication 12 ou 13, **caractérisé en ce que** l'on transmet avec le signal d'alerte, un signal correspondant à l'instant $\tau_{j+k}$ auquel le niveau de stockage de produit risque d'être inférieur au seuil $\theta$ préfixé.

**15.** Procédé selon l'une quelconque des revendications 12 à 14, **caractérisé en ce que** l'on transmet à partir du centre (42) de réapprovisionnement un signal d'accusé de réception du signal d'alerte.

**16.** Dispositif de génération d'au moins un signal d'alerte permettant la mise en oeuvre du procédé selon l'une quelconque des revendications 1 à 15, **caractérisé en ce qu'**il comprend des moyens de mesure (9) du niveau de stockage du produit, une unité centrale (30) pour exploiter le niveau relevé par les moyens de mesure (9), une mémoire (31) reliée à l'unité centrale (30) et destinée à mémoriser les instants $t_n$ de mesure délivrés par une horloge (32), les niveaux de stockage du produit $N_n$ dans le réservoir (3) et les quantités de produit $N_n$ consommées pendant les intervalles de temps $\Delta t_n$, des moyens de mémorisation (36) d'au moins un seuil $\theta$ de niveau de stockage, des moyens de comparaison (34) de la valeur du niveau de stockage $N_i - C_k$ à l'instant futur $\tau_{j+k}$ délivrée par l'unité centrale (30) avec ledit seuil $\theta$, et des moyens (38) de génération d'un signal d'alerte, commandés par les moyens de comparaison (34).

**17.** Dispositif selon la revendication 16 pour la mise en oeuvre d'un procédé selon la revendication 16, **caractérisé en ce qu'**il comprend en outre des moyens de transmission (44) dudit signal d'alerte au centre (42) de réapprovisionnement, qui sont commandés par les moyens (38) de génération dudit signal d'alerte.

**18.** Dispositif selon la revendication 16 ou 17 pour la mise en oeuvre d'un procédé selon la revendication 13, **caractérisé en ce que** les moyens de transmission (44) sont reliés à l'unité centrale (30) pour la transmission au centre (42) de réapprovisionnement d'un signal correspondant à la valeur $L_{j+k}$ de la quantité pouvant être mise dans le réservoir (3) lors d'un réapprovisionnement à l'instant $\tau_{j+k}$ et pour la transmission d'un signal correspondant à l'instant $\tau_{j+k}$.

**19.** Dispositif selon l'une des revendications précédentes, **caractérisé en ce que** les moyens (9) de mesure du niveau de stockage comprennent un capteur (10) de mesure de la pression différentielle entre deux capillaires (17,19) dont un premier (17) est relié à un point haut (13) du réservoir (3), et un second (19) est relié à un point bas (19) du réservoir (3).

**20.** Dispositif selon l'une quelconque des revendications 16 à 19, **caractérisé en ce qu'**il comprend une unité d'affichage (49) du type de produit contenu dans le réservoir et de la quantité $N_n$ du niveau de stockage du produit.

**21.** Dispositif selon l'une quelconque des revendications 16 à 20, **caractérisé en ce qu'**il comporte des moyens de réception (46) d'informations envoyées par le centre (42) de réapprovisionnement.

**22.** Dispositif selon la revendication 21 pour la mise en oeuvre d'un procédé selon la revendication 15, **caractérisé en ce qu'**il comporte une unité d'affichage (49) d'un accusé de réception émis par le centre (42) de réapprovisionnement en réponse à la réception d'un signal d'alerte de ce dernier.

**23.** Réservoir de stockage d'un produit, **caractérisé en ce qu'**il comporte un dispositif selon l'une quelconque des revendications 16 à 21.

**Patentansprüche**

**1.** Verfahren zur Generierung mindestens eines Alarmsignals in einem Lagertank (3) eines Produkts (4) für das Nachfüllen des Lagertanks (3), bei dem man mittels mindestens eines Messsensors (10), der mit dem Lagertank (3) verbunden ist, in aufeinander folgenden Augenblicken $t_0$, $t_1$... $t_{i-1}$, $t_i$ jeweils die Werte $N_0$, $N_1$... $N_{i-1}$, $N_i$ des Füllstands des Produkts in dem Lagertank (3) bestimmt, sowie die Werte der Menge des Produkts $\Delta N_1$, $\Delta N_2$,... $\Delta N_{i-1}$, $\Delta N_i$, die während der Zeitintervalle verbraucht wird die von zwei aufeinander folgenden Augenblicken $\Delta_{t1}=t_1-t_0$, $\Delta t_2=t_2-t_1$, ... $\Delta t_{i-1}=t_{i-1}-t_{i-2}$, $\Delta t_i=t_i-t_{i-1}$ definiert werden, das die folgenden Schritte umfasst:

- man speichert die Messwerte $N_0$, $N_1$,... $N_{i-1}$, $N_i$ sowie $\Delta N_1$, $\Delta N_2$,... $\Delta N_{i-1}$, $\Delta N_i$ und die zugeordneten Messaugenblicke $t_0$, $t_1$... $t_{i-1}$, $t_i$,
- man berechnet in aufeinander folgenden Augenblicken $\tau_0$, $\tau_1$... $\tau_{j-1}$, $\tau_j$, die jeweils um Zeitintervalle $\Delta\tau=\tau_1-\tau_0$, $\Delta\tau_2=\tau_2-\tau_1$,... $\Delta\tau_j=\tau_j-\tau_{j-1}$ beabstandet sind, wobei die Zeitintervalle $\Delta\tau$ vorausdefiniert sind und ihre Dauer größer oder gleich den Zeitintervallen $\Delta t_n$ ist, wobei n eine beliebige natürliche Zahl zwischen 0 und i ist, ausgehend von den gespeicherten Werten der während der Zeitintervalle $\Delta t_n$ verbrauchten Menge des Produkts $\Delta N_n$, einen geschätzten Wert der Menge des Produkts $C_k$, der zwischen dem Augenblick $\tau_j$ und dem Augenblick $\tau_{j+k}$ verbraucht wird, wobei $\tau_{j+k}$ der k. Augenblick nach $\tau_j$ und von diesem durch das Zeitintervall $\delta\tau_k=\Delta\tau_{j+1}+\Delta\tau_{j+2}+...+\Delta\tau_{j+k}$ beabstandet ist,
- man zieht von diesem Wert $C_k$ den jüngsten Messwert $N_i$ ab, um einen geschätzten Wert $N_i-C_k$ des Füllstands im Augenblick $\tau_{j+k}$ zu erzielen,
- man vergleicht diesen geschätzten Wert $N_i-C_k$ des Füllstands mit einem vorab festgelegten Schwellenwert $\theta$, und
- man erzeugt ein Alarmsignal, wenn der geschätzte Wert $N_i-C_k$ kleiner ist als der vorab festgelegte Schwellenwert $\theta$.

2. Verfahren nach Anspruch 1, **dadurch gekennzeichnet, dass** man die Werte der Menge des Produkts $\Delta N_n$, die während des Zeitintervalls $\Delta t_n$ verbraucht wird, bestimmt, indem man vom Wert $N_{n-1}$ des im Augenblick $t_{n-1}$ gemessenen Füllstands den Wert $N_n$ des im Augenblick $t_n$ gemessenen Füllstands abzieht.

3. Verfahren nach Anspruch 1, **dadurch gekennzeichnet, dass** man den Wert der Menge des Produkts $\Delta N_n$, der während des Zeitintervalls $\Delta t_n$ verbraucht wird, bestimmt, indem man mittels eines zweiten Sensors den aus dem Tank entnommenen Produktdurchfluss misst und diesen gemessenen Durchfluss zwischen den Augenblicken $t_{n-1}$ und $t_n$ integriert.

4. Verfahren nach einem der Ansprüche 1 bis 3, **dadurch gekennzeichnet, dass** alle Intervalle $\Delta t_n$ gleich sind.

5. Verfahren nach einem der Ansprüche 1 bis 4, **dadurch gekennzeichnet, dass** die Dauer der Zeitintervalle $\Delta t_n$ kürzer als zwei Stunden, vorzugsweise kürzer als eine Stunde und insbesondere gleich 30 Minuten, beträgt.

6. Verfahren nach einem der Ansprüche 1 bis 5, **dadurch gekennzeichnet, dass** die Zeitintervalle $\Delta\tau_1$ Vielfache der Zeitintervalle $\Delta t_n$ sind, und dass $\Delta\tau_1$ ferner vorzugsweise gleich vierundzwanzig Stunden oder einem Vielfachen von vierundzwanzig Stunden ist, wobei 1 eine beliebige natürliche Zahl zwischen 0 und j+k ist.

7. Verfahren nach einem der Ansprüche 1 bis 6, **dadurch gekennzeichnet, dass** jeder Augenblick $\tau_j$ einem bestimmten Augenblick eines Werktages eines Nachfüllcenters (42) des Lagertanks (3) entspricht.

8. Verfahren nach einem der Ansprüche 1 bis 7, **dadurch gekennzeichnet, dass** man die Gesamtmenge des Produkts $N_{tot}$ speichert, die im Lagertank (3) gelagert werden kann, und dadurch, dass man ferner in den Augenblicken $\tau_j$ eine Schätzung der Menge des Produkts $L_{j+k} = N_{tot}-(N_i-C_k)$ berechnet, die bei einem Nachfüllen dieses Letzteren im Augenblick $\tau_{j+k}$ in den Lagertank (3) gegeben werden kann.

9. Verfahren nach einem der Ansprüche 1 bis 8, **dadurch gekennzeichnet, dass** die Dauer der Zeitintervalle $\delta\tau_k$ einer vorausbestimmten Lieferfrist entspricht.

10. Verfahren nach einem der Ansprüche 1 bis 9, **dadurch gekennzeichnet, dass** der Schwellenwert $\theta$ aus einem kritischen Versorgungsknappheitsschwellenwert $\theta_c$ und einer Marge M besteht, wobei die Marge M so ausgewählt wird, dass die Wahrscheinlichkeit, dass der Füllstand im Augenblick $\tau_{j+k-1}$ unter $\theta_c$ sinkt, ungefähr gleich Null ist.

11. Verfahren nach Anspruch 10, **dadurch gekennzeichnet, dass** man ein Notwarnsignal generiert, wenn der geschätzte Wert $N_i-C_1$ kleiner oder gleich dem kritischen Schwellenwert $\theta_c$ ist, wobei $C_1$ die geschätzte Menge Verbrauch zwischen zwei aufeinander folgenden Augenblicken $\tau_j$ ist.

12. Verfahren nach einem der Ansprüche 1 bis 11, **dadurch gekennzeichnet, dass** man einem vom Lagertank (3) entfernten Nachfüllcenter (42) ein Warnsignal übermittelt.

**13.** Verfahren nach Anspruch 8 gemeinsam mit Anspruch 12, **dadurch gekennzeichnet, dass** man mit dem Warnsignal ein Signal übermittelt, das der geschätzten Menge des Produkts $L_{j+k}$ entspricht, die beim Nachfüllen des Lagertanks (3) im Augenblick $\tau_{j+k}$ eingefüllt werden kann.

**14.** Verfahren nach Anspruch 12 oder 13, **dadurch gekennzeichnet, dass** man mit dem Alarmsignal ein Signal übermittelt, das dem Augenblick $\tau_{j+k}$, in dem der Füllstand des Produkts Gefahr läuft, geringer als der vorab festgelegte Schwellenwert $\theta$ zu sein.

**15.** Verfahren nach einem der Ansprüche 12 bis 14, **dadurch gekennzeichnet, dass** man vom Nachfüllcenter (42) ein Empfangsbestätigungssignal für das Alarmsignal sendet.

**16.** Vorrichtung zur Generierung mindestens eines Alarmsignals, die das Anwenden des Verfahrens nach einem der Ansprüche 1 bis 15 erlaubt, **dadurch gekennzeichnet, dass** sie Mittel (9) zum Messen des Füllstands des Produkts, eine Zentraleinheit (30) zur Nutzung des durch die Messmittel (9) gemessenen Füllstands, einen Speicher (31), der mit der Zentraleinheit (30) verbunden und dazu bestimmt ist, die Messaugenblicke $t_n$, die von einem Taktgeber (32) gegeben werden, die Füllstände des Produkts $N_n$ im Lagertank (3) und die Mengen des Produkts $N_n$, die während der Zeitintervalle $\Delta t_n$ verbraucht werden, zu speichern, Mittel (36) zum Speichern mindestens eines Füllstandsschwellenwerts $\theta$, Mittel (34) zum Vergleichen des Werts des Füllstands $N_i - C_k$ im zukünftigen Augenblick $\tau_{j+k}$, der von der Zentraleinheit (30) mit dem Schwellewert $\theta$ geliefert wird, und Mittel (38) zum Generieren eines Alarmsignals, die von den Vergleichsmitteln (34) gesteuert werden, umfasst.

**17.** Vorrichtung nach Anspruch 16 zum Anwenden eines Verfahrens nach Anspruch 16, **dadurch gekennzeichnet, dass** sie außerdem Mittel zum Übertragen (44) des Alarmsignals zum Nachfüllcenter (42) umfasst, die von den Mitteln (38) zum Generieren des Alarmsignals gesteuert werden.

**18.** Vorrichtung nach Anspruch 16 oder 17 für das Anwenden eines Verfahrens nach Anspruch 13, **dadurch gekennzeichnet, dass** die Übertragungsmittel (44) mit der Zentraleinheit (30) zur Übertragung eines Signals, das dem Wert $L_{j+k}$ der Menge entspricht, die beim Nachfüllen im Augenblick $\tau_{j+k}$ in den Lagertank (3) gegeben werden kann, an das Nachfüllcenter (42) und für die Übertragung eines dem Augenblick $\tau_{j+k}$ entsprechenden Signals, verbunden sind.

**19.** Vorrichtung nach einem der vorhergehenden Ansprüche, **dadurch gekennzeichnet, dass** die Mittel (9) zum Messen des Füllstands einen Messsensor (10) des Differenzdrucks zwischen zwei Kapillargefäßen (17, 19) umfassen, von welchen ein erstes (17) an einen Hochpunkt (13) des Lagertanks (3) angeschlossen ist, und ein zweites (19) an einen Tiefpunkt (19) des Lagertanks (3) angeschlossen ist.

**20.** Vorrichtung nach einem der Ansprüche 16 bis 19, **dadurch gekennzeichnet, dass** sie eine Anzeigeeinheit (49) des im Lagertank enthaltenen Produkttyps und der Menge $N_n$ des Füllstands des Produkts umfasst.

**21.** Vorrichtung nach einem der Ansprüche 16 bis 20, **dadurch gekennzeichnet, dass** sie Empfangsmittel (46) für Informationen umfasst, die vom Nachfüllcenter (42) gesendet werden.

**22.** Vorrichtung nach Anspruch 21 für das Anwenden eines Verfahrens nach Anspruch 15, **dadurch gekennzeichnet, dass** sie eine Anzeigeeinheit (49) einer Empfangsbestätigung umfasst, die vom Nachfüllcenter (42) als Antwort auf den Empfang eines Alarmsignals Letzterer gesendet wird.

**23.** Lagertank eines Produkts, **dadurch gekennzeichnet, dass** er eine Vorrichtung nach einem der Ansprüche 16 bis 21 umfasst.

**Claims**

**1.** Process for generating at least one warning signal relating to the level in a tank (3) for storing a product (4) with a view to the restocking of the tank (3), in which at least one measurement sensor (10) associated with the tank (3) is used to determine, at successive instants $t_0$, $t_1$... $t_{i-1}$, $t_i$ respectively, the values $N_0$, $N_1$... $N_{i-1}$, $N_i$ of the level of storage of the product in the tank (3), together with the values of the quantity of product $\Delta N_1$, $\Delta N_2$,... $\Delta N_{i-1}$, $\Delta N_i$ consumed during the time intervals defined by two successive instants $\Delta t_1 = t_1 - t_0$, $\Delta t_2 = t_2 - t_1$,... $\Delta t_{i-1} = t_{i-1} - t_{i-2}$, $\Delta t_i = t_i - t_{i-1}$, comprising the following steps:

- the measured values $N_0$, $N_1$,... $N_{i-1}$, $N_i$, together with $\Delta N_1$, $\Delta N_2$, ... $\Delta N_{i-1}$, $\Delta N_i$ and the associated measurement instants $t_0$, $t_1$... $t_{i-1}$, $t_i$ are placed in memory,

- at successive instants $\tau_0$, $\tau_1$... $\tau_{j-1}$, $\tau_j$ which are spaced apart by time intervals $\Delta\tau_1 = \tau_1 - \tau_0$, $\Delta\tau_2 = \tau_2 - \tau_1$,... $\Delta\tau_j = \tau_j - \tau_{j-1}$ respectively, the time intervals $\Delta\tau$ being predefined and their duration being greater than or equal to the time intervals $\Delta t_n$, n being any natural number lying between 0 and i, the values placed in memory of the

product quantity consumed $\Delta N_n$ during the time intervals $\Delta t_n$ are used to calculate a value of the estimated quantity of product $C_k$ which will be consumed between the instant $\tau_j$ and the instant $\tau_{j+k}$, $\tau_{j+k}$ being the k-th instant following $\tau_j$ and spaced apart therefrom by the time interval $\delta\tau_k = \Delta\tau_{j+1} + \Delta\tau_{j+2} + ... + \Delta\tau_{j+k}$,

- this value $C_k$ is subtracted from the most recent measured value $N_i$ so as to obtain an estimated value $N_i-C_k$ of the storage level at the instant $\tau_{j+k}$,
- this estimated value $N_i-C_k$ of the storage level is compared with a preset threshold $\theta$, and
- a warning signal is generated if the estimated value $N_i-C_k$ is less than the preset threshold $\theta$.

2. Process according to Claim 1, **characterized in that** the values of the product quantity $\Delta N_n$ consumed during the time interval $\Delta t_n$ are determined by subtracting the value $N_n$ of the storage level measured at the instant $t_n$ from the value $N_{n-1}$ of the storage level measured at the instant $t_{n-1}$.

3. Process according to Claim 1, **characterized in that** the value of the product quantity $\Delta N_n$ consumed during the time interval $\Delta t_n$ is determined by measuring by means of a second sensor the flow rate of product drawn off from the tank and by integrating this measured flow rate between the instants $t_{n-1}$ and $t_n$.

4. Process according to any one of Claims 1 to 3, **characterized in that** all the intervals $\Delta t_n$ are equal.

5. Process according to any one of Claims 1 to 4, **characterized in that** the duration of the time intervals $\Delta t_n$ is less than two hours, preferably less than one hour and especially equal to 30 minutes.

6. Process according to any one of Claims 1 to 5, **characterized in that** the time intervals $\Delta\tau_i$ are multiples of the time intervals $\Delta t_n$ and preferably, $\Delta\tau_i$ is moreover equal to twenty-four hours or a multiple of twenty-four hours, i being any natural number lying between 0 and j+k.

7. Process according to any one of Claims 1 to 6, **characterized in that** each instant $\tau_i$ corresponds to a given moment of a working day of a centre (42) for restocking the tank (3).

8. Process according to any one of Claims 1 to 7, **characterized in that** the total quantity of product $N_{tot}$ which can be stored in the said tank (3) is placed in memory, and **in that** an estimate of the quantity of product $L_{j+k}=N_{tot}-(N_i-C_k)$ which can be placed in the tank (3) during a restocking of the latter at the instant $\tau_{j+k}$ is moreover calculated at the instants $\tau_i$.

9. Process according to any one of Claims 1 to 8, **characterized in that** the duration of the time intervals $\delta\tau_k$ corresponds to a predefined delivery deadline.

10. Process according to any one of Claims 1 to 9, **characterized in that** the threshold $\theta$ is made up of a critical stock depletion threshold $\theta_c$ and a margin M, the margin M being chosen in such a way that the probability of the storage level dropping below $\theta_c$ at the instant $\tau_{j+k-1}$ is almost equal to zero.

11. Process according to Claim 10, **characterized in that** an emergency warning signal is generated if the estimated value $N_i-C_1$ is less than or equal to the critical threshold $\theta_c$, $C_1$ being the estimated quantity of consumption between two successive instants $\tau_i$.

12. Process according to any one of Claims 1 to 11, **characterized in that** a warning signal is transmitted to a restocking centre (42) which is remote from the storage tank (3).

13. Process according to Claim 8 together with Claim 12, **characterized in that** a signal corresponding to the estimated quantity of product $L_{j+k}$ which can be placed in the tank during a restocking of the tank (3) at the instant $\tau_{j+k}$ is transmitted together with the warning signal.

14. Process according to Claim 12 or 13, **characterized in that** a signal corresponding to the instant $\tau_{j+k}$ at which the product storage level runs the risk of being less than the preset threshold $\theta$ is transmitted together with the warning signal.

15. Process according to any one of Claims 12 to 14, **characterized in that** a signal acknowledging receipt of the warning signal is transmitted from the restocking centre (42).

16. Device for generating at least one warning signal making it possible to implement the process according to any one of Claims 1 to 15, **characterized in that** it comprises means (9) for measuring the storage level of the product, a central processing unit (30) for utilizing the level read off by the measurement means (9), a memory (31) linked to the central processing unit (30) and intended for holding the measurement instants $t_n$ output by a clock (32), the storage levels of the product $N_n$ in the tank (3) and the product quantities $N_n$ consumed during the time intervals $\Delta t_n$, means (36) for placing in memory at least one storage level threshold $\theta$, means (34) for comparing the value of the storage level $N_i-C_k$ at the future instant $\tau_{j+k}$ output by the central processing unit (30) with the said threshold $\theta$, and means (38) for generating a warning signal which are controlled by the comparison means (34).

17. Device according to Claim 16 for implementing a process according to Claim 16, **characterized in that** it furthermore comprises means (44) for transmitting the said warning signal to the restocking centre (42), and which are controlled by the means (38) for generating the said warning signal.

18. Device according to Claim 16 or 17 for implementing a process according to Claim 13, **characterized in that** the transmission means (44) are linked to the central processing unit (30) for transmission to the restocking centre (42) of a signal corresponding to the value $L_{j+k}$ of the quantity which can be placed in the tank (3) during a restocking at the instant $\tau_{j+k}$ and for transmission of a signal corresponding to the instant $\tau_{j+k}$.

19. Device according to one of the preceding claims, **characterized in that** the means (9) for measuring the storage level comprise a sensor (10) for measuring the differential pressure between two capillaries (17, 19) of which a first (17) is linked to a high point (13) of the tank (3), and a second (19) is linked to a low point (15) of the tank (3).

20. Device according to any one of Claims 16 to 19, **characterized in that** it comprises a unit (49) for displaying the type of product contained in the tank and the quantity $N_n$ of the storage level of the product.

21. Device according to any one of Claims 16 to 20, **characterized in that** it comprises means (46) for receiving information sent by the restocking centre (42).

22. Device according to Claim 21 for implementing a process according to Claim 15, **characterized in that** it comprises a unit (49) for displaying an acknowledgement of receipt issued by the restocking centre (42) in response to the receiving of a warning signal therefrom.

23. Tank for storing a product, **characterized in that** it comprises a device according to any one of Claims 16 to 21.

FIG.1

FIG. 2

EP 0 905 498 B1

Δt₂  Δt₄  Δt₆  Δt₈  Δt_{i-1}

Δt₁  Δt₃  Δt₅  Δt₇  Δt₉  Δt_{i-2}  Δti

t₀ t₁ t₂ t₃ t₄ t₅ t₆ t₇ t₈ t₉  t_{i-3} t_{i-2} t_{i-1} ti  80

τ₀  τ₁  τ₂  τ₃  τ_{j-1}  τ_j  τ_{j+1}  τ_{j+k-1}  τ_{j+k}  t

Δτ₁

Δτ₂  Δτ₃  Δτ_{j+1}  Δτ_{j+k}

Δτ_j

δτ_k

## FIG. 3

Niveau de stockage
du produit dans le reservoir

N_tot

N₀  ΔN₁  82  84

N₁  ΔN₂  86

N₂

81

N_i

87

θ  L_{j+k}

M  N_i - C_k

θ_c

0

t₀ t₁ t₂ t₃ t₄ t₅ t₆  t_{i-2} t_{i-1} ti

τ₀  τ₁  τ₂  τ_j  τ_{j+1}  τ_{j+k-1}  τ_{j+k}

## FIG. 4